# EUROPEAN PATENT APPLICATION

(11) **EP 4 444 028 A1**
(43) Date of publication of application: **09.10.2024**
(21) Application number: 22901897.3
(22) Date of filing: 05.12.2022
(51) Int. Cl.: H04W 76/28, H04W 76/14, H04W 72/04, H04W 28/02, H04W 72/12, H04W 4/40, H04W 72/02, H04W 72/54

(54) **METHOD AND APPARATUS FOR SELECTING SL DRX TIMER IN NR V2X**

(30) Priority: 03.12.2021 KR 20210172036; 26.12.2021 US 202163293826 P; 18.01.2022 KR 20220007178
(71) Applicant: LG Electronics Inc., Yeongdeungpo-gu Seoul 07336 (KR)
(72) Inventor: PARK, Giwon, Seoul 06772 (KR); SEO, Hanbyul, Seoul 06772 (KR); LEE, Seungmin, Seoul 06772 (KR); BACK, Seoyoung, Seoul 06772 (KR)
(74) Representative: Plasseraud IP
(86) International application number: PCT/KR2022/019626
(87) International publication number: WO 2023/101539

(57) **Abstract**

Provided are a method by which a first apparatus performs wireless communication and an apparatus supporting same. The method comprises the steps of: obtaining a plurality of sidelink (SL) DRX inactivity timers that are mapped to a plurality of SL quality of service (QoS) profiles associated with a destination layer-2 (L2) identifier (ID); receiving, through a physical sidelink control channel (PSCCH), first sidelink control information (SCI) for scheduling a physical sidelink shared channel (PSSCH) and second SCI; receiving, through the PSSCH, the second SCI comprising a destination layer-1 (L1) ID and cast type information; selecting one SL DRX inactivity timer from among the plurality of SL DRX inactivity timers associated with the destination L 1 ID, on the basis of failure to decode a medium access control (MAC) protocol data unit (PDU); and starting the one SL DRX inactivity timer, wherein the one SL DRX inactivity timer may be an SL DRX inactivity timer that has the longest duration among the plurality of SL DRX inactivity timers.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL SOLUTION

In an embodiment, provided is a method for performing wireless communication by a first device. The method may comprise: obtaining a plurality of sidelink (SL) DRX inactivity timers mapped to a plurality of SL quality of service (QoS) profiles related to a destination layer-2 (L2) identifier (ID); receiving, through a physical sidelink control channel (PSCCH), first sidelink control information (SCI) for scheduling of second SCI and a physical sidelink shared channel (PSSCH); receiving, through the PSSCH, the second SCI including cast type information and a destination layer-1 (L1) ID; selecting a single SL DRX inactivity timer from the plurality of SL DRX inactivity timers related to the destination L1 ID, based on a failure to decode a medium access control (MAC) protocol data unit (PDU); and starting the single SL DRX inactivity timer, wherein the single SL DRX inactivity timer is a SL DRX inactivity timer with the longest length of the plurality of SL DRX inactivity timers.

In an embodiment, provided is a first device adapted to perform wireless communication. The first device may comprise: one or more memories storing instructions; one or more transceivers; and one or more processors connected to the one or more memories and the one or more transceivers. The one or more processors may execute the instructions to: obtain a plurality of sidelink (SL) DRX inactivity timers mapped to a plurality of SL quality of service (QoS) profiles related to a destination layer-2 (L2) identifier (ID); control the one or more transceivers to receive, through a physical sidelink control channel (PSCCH), first sidelink control information (SCI) for scheduling of second SCI and a physical sidelink shared channel (PSSCH); control the one or more transceivers to receive, through the PSSCH, the second SCI including cast type information and a destination layer-1 (L1) ID; select a single SL DRX inactivity timer from the plurality of SL DRX inactivity timers related to the destination L1 ID, based on a failure to decode a medium access control (MAC) protocol data unit (PDU); and start the single SL DRX inactivity timer, wherein the single SL DRX inactivity timer is a SL DRX inactivity timer with the longest length of the plurality of SL DRX inactivity timers.

In an embodiment, provided is a processing device adapted to control a first device. The processing device may comprise: one or more processors; and one or more memories operably connected to the one or more processors and storing instructions. The one or more processors may execute the instructions to: obtain a plurality of sidelink (SL) DRX inactivity timers mapped to a plurality of SL quality of service (QoS) profiles related to a destination layer-2 (L2) identifier (ID); receive, through a physical sidelink control channel (PSCCH), first sidelink control information (SCI) for scheduling of second SCI and a physical sidelink shared channel (PSSCH); receive, through the PSSCH, the second SCI including cast type information and a destination layer-1 (L1) ID; select a single SL DRX inactivity timer from the plurality of SL DRX inactivity timers related to the destination L1 ID, based on a failure to decode a medium access control (MAC) protocol data unit (PDU); and start the single SL DRX inactivity timer, wherein the single SL DRX inactivity timer is a SL DRX inactivity timer with the longest length of the plurality of SL DRX inactivity timers.

In an embodiment, provided is a non-transitory computer-readable storage medium storing instructions. The instructions, when executed, may cause a first device to: obtain a plurality of sidelink (SL) DRX inactivity timers mapped to a plurality of SL quality of service (QoS) profiles related to a destination layer-2 (L2) identifier (ID); receive, through a physical sidelink control channel (PSCCH), first sidelink control information (SCI) for scheduling of second SCI and a physical sidelink shared channel (PSSCH); receive, through the PSSCH, the second SCI including cast type information and a destination layer-1 (L1) ID; select a single SL DRX inactivity timer from the plurality of SL DRX inactivity timers related to the destination L1 ID, based on a failure to decode a medium access control (MAC) protocol data unit (PDU); and start the single SL DRX inactivity timer, wherein the single SL DRX inactivity timer is a SL DRX inactivity timer with the longest length of the plurality of SL DRX inactivity timers.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 is a drawing to shows a problem according to the prior art.
FIG. 9 shows a procedure for an RX UE to select a parameter related to SL DRX, based on an embodiment of the present disclosure.
FIG. 10 shows a method for a first device to perform wireless communication, based on an embodiment of the present disclosure.
FIG. 11 shows a method for a second device to perform wireless communication, based on an embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, `when, if, or in case of" may be replaced with `based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

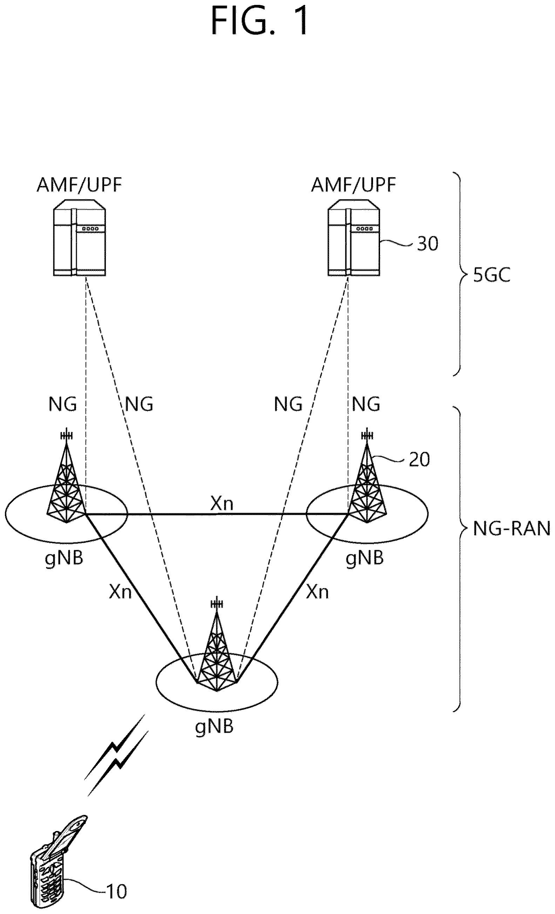

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

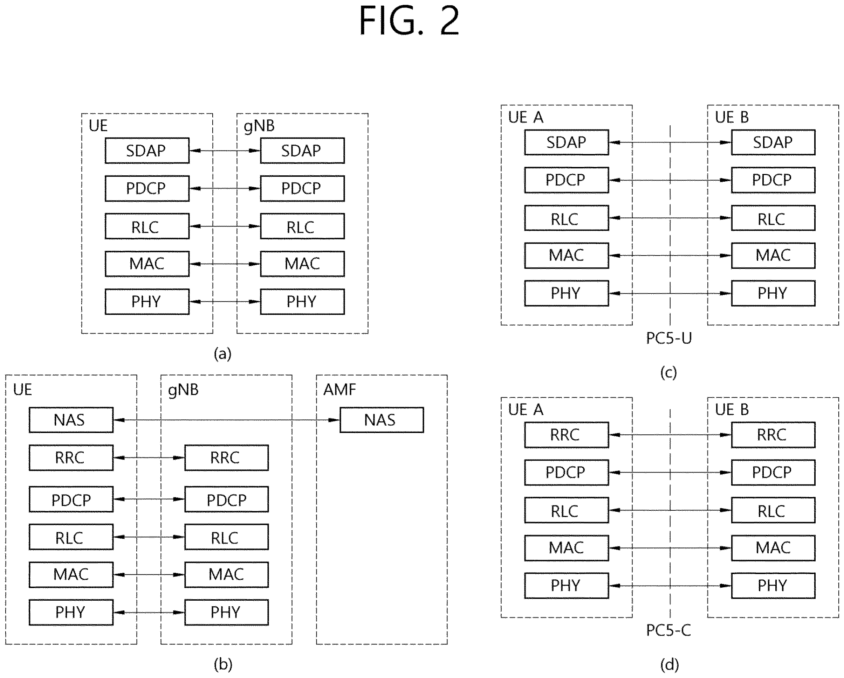

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

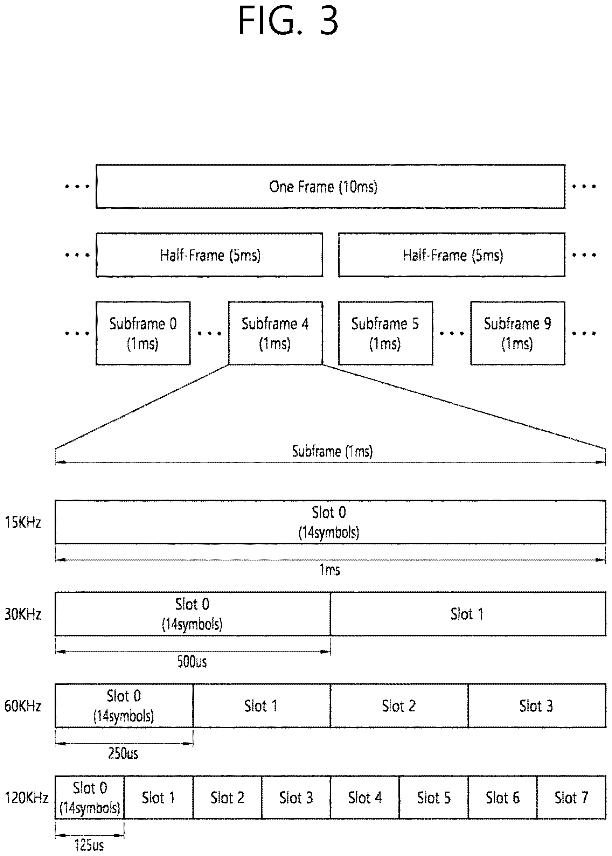

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). Ahalf-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

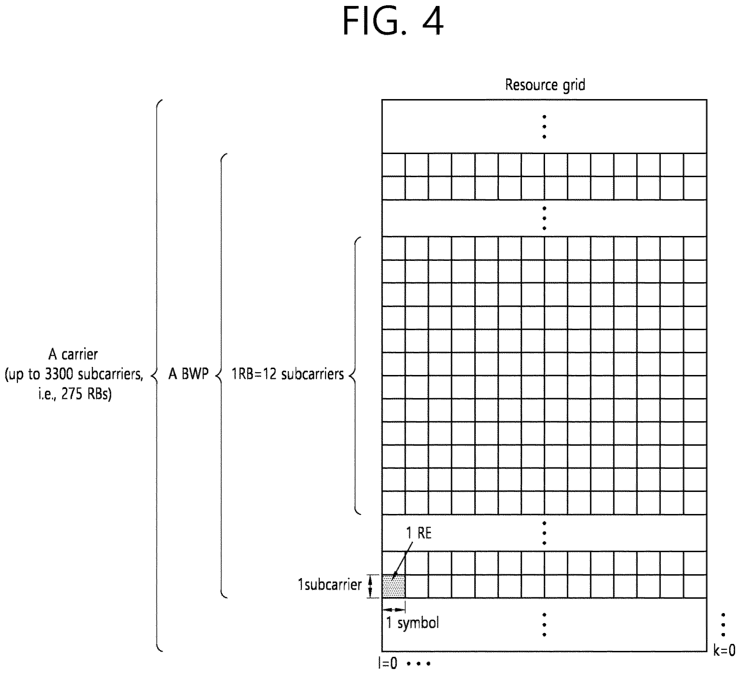

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

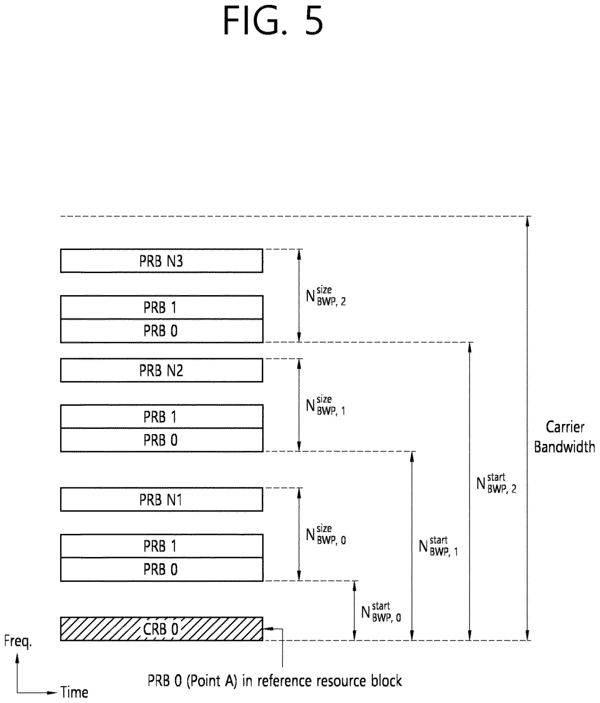

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

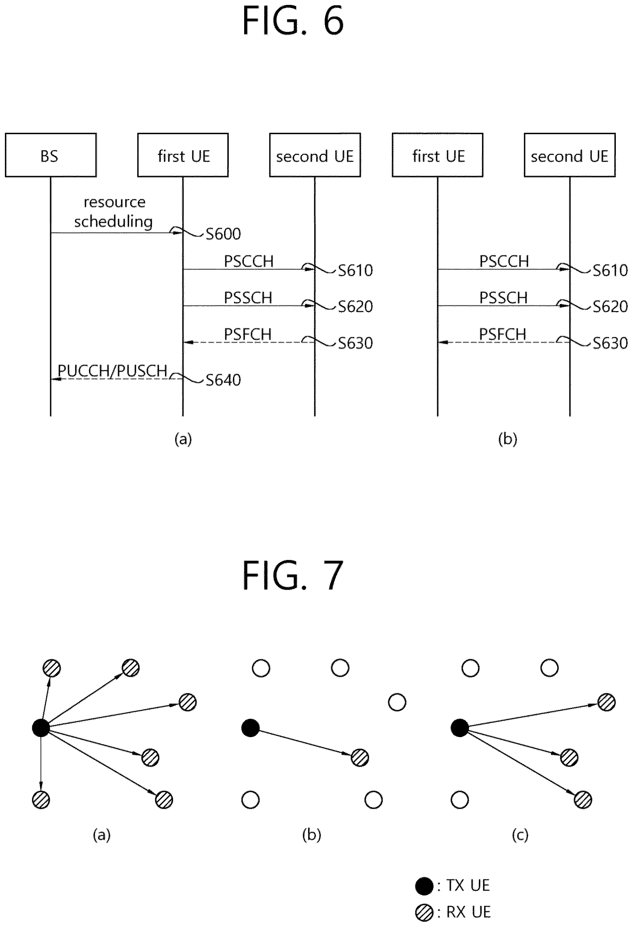

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (10g₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

erenaer, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.
(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{subch,slot}-1] PRBs from the M_{PRB,Set}^{PSFCH} PRBs to slot i among the PSSCH slots associated with the PSFCH slot and subchannel j, where M^{PSFCH}_{subch,slot} = M^{PSFCH}_{PRB,set}/(N_{subch}·N^{PSFCH}_{PSSCH}), 0 ≤ 1 ≤ N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,

- N^{PSFCH}_{type} = 1 and the M^{PSFCH}_{subch,slot} PRBs are associated with the starting subchannel of the corresponding PSSCH

- N^{PSFCH}_{type} = N^{PSSCH}_{subch} and the N^{PSSCH}_{subch}·M^{PSFCH}_{subch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 8.

**[Table 8]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a m_{cs} value, for computing a value of cyclic shift α, as in Table 9 if the UE detects a SCI format 2-A with Cast type indicator field value of "01" or " 10", or as in Table 10 if the UE detects a SCI format 2-B or a SCI format 2-A with Cast type indicator field value of "11". The UE applies one cyclic shift from a cyclic shift pair to a sequence used for the PSFCH transmission.

**[Table 9]**

| HARQ-ACK Value | 0 (NACK) | 1 (ACK) |
|---|---|---|
| Sequence cyclic shift | 0 | 6 |

**[Table 10]**

| HARQ-ACK Value | 0 (NACK) | 1 (ACK) |
|---|---|---|
| Sequence cyclic shift | 0 | N/A |

Meanwhile, in NR V2X of release 16, power saving operation of a UE was not supported. On the other hand, from NR V2X of release 17, the power saving operation of the UE (e.g., Power Saving UE) will be supported.

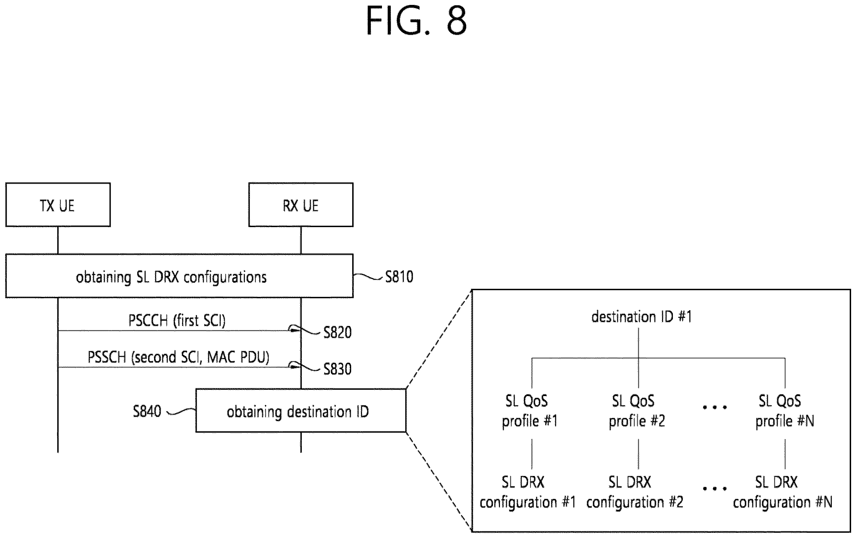

FIG. 8 is a drawing to shows a problem according to the prior art. The embodiment of FIG. 8 may be combined with various embodiments of the present disclosure.

Referring to FIG. 8, in step S810, a plurality of SL DRX configurations may be configured for a TX UE and/or an RX UE. For example, the plurality of SL DRX configuration may be SL DRX configurations used for groupcast communication or broadcast communication.

In step S820, the RX UE may receive first SCI through a PSCCH. In step S830, the RX UE may receive second SCI and a MAC PDU through a PSSCH. Through this, in step S840, the RX UE may obtain a destination ID. For example, the destination ID may be a 16-bit L1 destination ID included in the second SCI. For example, the destination ID may be an L2 destination ID that combines a 16-bit L1 destination ID included in the second SCI with an 8-bit partial destination ID included in a MAC subheader within the MAC PDU.

In this case, if there are a plurality of SL DRX configurations related to the destination ID, a SL DRX configuration or a parameter (e.g., timer, cycle, etc.) to be used by the RX UE need to be clearly defined among the plurality of SL DRX configurations.

Specifically, in the embodiment of FIG. 8, it is assumed that an intended destination ID by the RX UE is the destination ID #1, and that the destination ID #1 is related to the SL QoS profile #1 to the SL QoS profile #N. For example, the SL QoS profile may be related to a PC5 QoS Identifier (PQI). For example, the SL QoS profile may be indicated/identified by the PQI. Additionally, in the embodiment of FIG. 8, it is assumed that the SL QoS profile #1 to the SL QoS profile #N are related to the SL DRX configuration #1 to SL DRX configuration #N, respectively. Under the above assumptions, the RX UE obtaining the destination ID #1 may need to determine the SL DRX configuration or the parameter (e.g., timers, cycles, etc.) to be used for the SL DRX operation.

Meanwhile, in groupcast/broadcast, if the RX UE successfully receives and decodes the SCI transmitted by the TX UE but fails to decode the MAC PDU, the RX UE can obtain the L1 destination ID information included in the SCI but cannot obtain the remaining L2 destination ID information included in the MAC subheader. In this case, the RX UE cannot know L2 destination ID information. Therefore, a problem may occur in which the RX UE cannot accurately infer information on QoS profile(s) mapped to the 24-bit L2 destination ID. In other words, a problem may occur in which the RX UE cannot infer a SL DRX configuration (SL DRX onduration timer, SL DRX cycle, SL DRX inactivity timer, and/or SL DRX retransmission timer) mapped to the QoS profile(s) associated with the L2 destination.

Based on various embodiments of the present disclosure, proposed are a method for selecting a SL DRX configuration (e.g., timer, cycle, etc.) by a UE in sidelink groupcast and/or broadcast, and a device supporting the same.

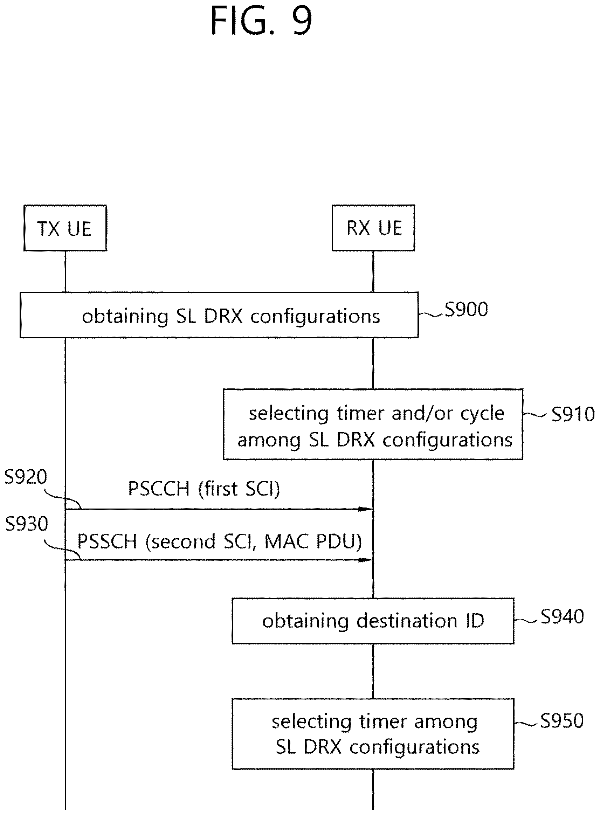

FIG. 9 shows a procedure for an RX UE to select a parameter related to SL DRX, based on an embodiment of the present disclosure. The embodiment of FIG. 9 may be combined with various embodiments of the present disclosure.

Referring to FIG. 9, in step S900, the TX UE and/or the RX UE may obtain a plurality of SL DRX configurations. For example, the plurality of SL DRX configurations may be configured or pre-configured for the TX UE and/or the RX UE. For example, the plurality of SL DRX configurations may be SL DRX configurations used for groupcast communication or broadcast communication.

The SL DRX configuration referred to in the present disclosure may include at least one or more of the following parameters/information.
(1) SL drx-onDurationTimer: the duration at the beginning of a SL DRX Cycle
(2) SL drx-SlotOffset: the delay before starting the sl drx-onDurationTimer
(3) SL drx-InactivityTimer: the duration after the PSCCH occasion in which a PSCCH indicates a new SL transmission for the MAC entity
(4) SL drx-RetransmissionTimer (per HARQ process or per sidelink process): the maximum duration until a retransmission is received
(5) SL drx-HARQ-RTT-Timer (per HARQ process or per sidelink process): the minimum duration before PSCCH (sidelink control information) & PSSCH for SL HARQ retransmission is expected by the MAC entity
(6) SL drx-LongCycleStartOffset: the Long DRX cycle and drx-StartOffset which defines the subframe where the Long and Short DRX Cycle starts
(7) SL drx-ShortCycle (optional): the Short DRX cycle
(8) SL drx-ShortCycleTimer (optional): the duration the UE shall follow the Short DRX cycle
(9) SL drx-HARQ-RTT-Timer (per sidelink process): the minimum duration before an assignment for HARQ retransmission is expected by the MAC entity
(10) SL drx-StartOffset: the subframe where the SL DRX cycle starts
(11) SL drx-Cycle: SL DRX cycle

The following SL DRX timer referred to in the present disclosure may be used for the following purposes.
(1) SL DRX onduration timer: the duration in which a UE performing the SL DRX operation should basically operate in an active time for PSCCH/PSSCH reception of a counterpart UE
(2) SL DRX inactivity timer: the duration in which a UE performing the SL DRX operation extends the SL DRX onduration period, which is the duration in which the UE should basically operate in an active time for PSCCH/PSSCH reception of a counterpart UE

For example, the UE may extend the SL DRX onduration timer by the SL DRX inactivity timer duration. Also, if the UE receives a new packet (e.g., new PSSCH transmission) from the counterpart UE, the UE may extend the SL DRX onduration timer by starting the SL DRX inactivity timer.

For example, the SL DRX inactivity timer may be used to extend the duration of the SL DRX onduration timer, which is the duration in which the RX UE performing the SL DRX operation should basically operate in an active time for PSCCH/PSSCH reception of a counterpart TX UE. That is, the SL DRX onduration timer may be extended by the duration of the SL DRX inactivity timer. In addition, if the RX UE receives a new packet (e.g., new PSSCH transmission) from the counterpart TX UE, the RX UE may extend the SL DRX onduration timer by starting the SL DRX inactivity timer.

(3) SL DRX HARQ RTT Timer: the duration in which a UE performing the SL DRX operation operates in a sleep mode until the UE receives a retransmission packet (or PSSCH assignment) transmitted by a counterpart UE

For example, if the UE starts the SL DRX HARQ RTT timer, the UE may determine that the counterpart UE will not transmit a sidelink retransmission packet to the UE until the SL DRX HARQ RTT timer expires, and the UE may operate in a sleep mode while the corresponding timer is running. For example, if the UE starts the SL DRX HARQ RTT timer, the UE may not monitor the sidelink retransmission packet from the counterpart UE until the SL DRX HARQ RTT timer expires. For example, if the RX UE which has received a PSCCH/PSSCH transmitted by the TX UE transmits SL HARQ NACK feedback, the RX UE may start the SL DRX HARQ RTT timer. In this case, the RX UE may determine that the counterpart TX UE will not transmit a sidelink retransmission packet to the RX UE until the SL DRX HARQ RTT timer expires, and the RX UE may operate in a sleep mode while the corresponding timer is running.

(4) SL DRX retransmission timer: the timer which starts when the SL DRX HARQ RTT timer expires, and the duration in which a UE performing the SL DRX operation operates in an active time to receive a retransmission packet (or PSSCH assignment) transmitted by a counterpart UE

For example, during the corresponding timer duration, the UE may receive or monitor the retransmission sidelink packet (or PSSCH assignment) transmitted by the counterpart UE. For example, the RX UE may receive or monitor a retransmission sidelink packet (or PSSCH assignment) transmitted by the counterpart TX UE while the SL DRX retransmission timer is running.

In the present disclosure, the names of timers (Uu DRX HARQ RTT TimerSL, Uu DRX Retransmission TimerSL, Sidelink DRX Onduration Timer, Sidelink DRX Inactivity Timer, Sidelink DRX HARQ RTT Timer, Sidelink DRX Retransmission Timer, etc.) are exemplary, and a timer performing the same/similar function based on the description of each timer may be regarded as the same/similar timer regardless of its name.

In step S910, the RX UE may select a timer and/or a cycle from the plurality of SL DRX configurations based on an intended destination ID. For example, the destination ID may be an L2 destination ID. For example, the destination ID may be an L1 destination ID. For example, the timer may be an onduration timer.

In step S920, the RX UE may receive first SCI through a PSCCH. In step S930, the RX UE may receive second SCI and a MAC PDU through a PSSCH. Through this, in step S940, the RX UE may obtain a destination ID. For example, the destination ID may be a 16-bit L1 destination ID included in the second SCI. For example, the destination ID may be an L2 destination ID that combines a 16-bit L1 destination ID included in the second SCI with an 8-bit partial destination ID included in a MAC subheader within the MAC PDU.

In step S950, the RX UE may select a timer from the plurality of SL DRX configurations based on the destination ID. For example, the destination ID may be an L2 destination ID. For example, the destination ID may be an L1 destination ID. For example, the timer may be an inactivity timer.

Hereinafter, a method for the RX UE to select a timer and/or a cycle from the plurality of SL DRX configurations based on the destination ID will be described in detail.

### 1. Method for selecting a timer value

Based on an embodiment of the present disclosure, if there are multiple timer values (e.g., onduration timer values, inactivity timer values, retransmission timer values) based on PQIs, the RX UE may select one timer value to be used based on a SL priority included in the SCI. If the TX UE has multiple flows for the same groupcast/broadcast (e.g., the same L2 destination ID for the groupcast/broadcast) and the TX UE transmits a TB for each flow, the RX UE may receive SCI associated with each TB. Furthermore, there may be multiple PQIs for the same groupcast/broadcast (e.g., the same L2 destination ID for the groupcast/broadcast), and there may be a SL DRX configuration mapped to each PQI. Based on an embodiment of the present disclosure, if the RX UE receives SCI associated with a TB for multiple flows transmitted by the TX UE, the RX UE may select a value of a SL DRX timer (e.g., SL DRX onduration timer, SL DRX inactivity timer, SL DRX retransmission timer, SL DRX HARQ RTT timer) to be used based on information included in the SCI.

For example, the RX UE may backtrack a PQI based on the SL priority included in the SCI and check the PQI mapped to each SL priority. Alternatively, for example, if the RX UE checks an L1 destination ID related to groupcast or broadcast included in the SCI and the remaining destination ID included in the MAC subheader, the RX UE may determine single or multiple PQIs mapped to an L2 destination ID related to groupcast or broadcast. In addition, the RX UE may determine a SL DRX configuration mapped to each PQI. If PQI values mapped to a SL priority included in each SCI are independent values, the RX UE may select the highest SL priority, and the RX UE may select and use a timer value of a SL DRX configuration mapped to a PQI associated with the highest SL priority. Alternatively, the RX UE may select the smallest PQI index, and the RX UE may select a timer value of a SL DRX configuration associated with the smallest PQI index. Alternatively, the RX UE may select the largest PQI index, and the RX UE may select a timer value of a SL DRX configuration associated with the largest PQI index.

For example, the RX UE may backtrack a PQI based on the SL priority included in the SCI and check the PQI mapped to each SL priority. Alternatively, for example, if the RX UE checks an L1 destination ID related to groupcast or broadcast included in the SCI and the remaining destination ID included in the MAC subheader, the RX UE may determine single or multiple PQIs mapped to an L2 destination ID related to groupcast or broadcast. In addition, the RX UE may determine a SL DRX configuration mapped to each PQI. If PQI values mapped to a SL priority included in each SCI are not independent values, i.e., if the same PQI values are also found together (e.g., PQI 1 is related to SL priority 1, PQI 2 is related to SL priority 2, PQI 1 is related to SL priority 3, etc.), the RX UE may select and use the longest value among timer values of configurations mapped to each overlapping PQI with the highest SL priority. Alternatively, the RX UE may select and use a timer value of a SL DRX configuration associated with a PQI with the highest SL priority. Alternatively, the RX UE may select the smallest PQI index, and the RX UE may select a timer value of a SL DRX configuration associated with the smallest PQI index. Alternatively, the RX UE may select the largest PQI index, and the RX UE may select a timer value of a SL DRX configuration associated with the largest PQI index. Alternatively, the RX UE may select the highest SL priority, and the RX UE may select a timer value of a SL DRX configuration associated with the highest SL priority.

For example, the RX UE may select the longest timer value of SL DRX configurations mapped to PQIs. Alternatively, for example, the RX UE may select the shortest timer value of SL DRX configurations mapped to PQIs.

Based on an embodiment of the present disclosure, when receiving the SCI, the RX UE may not use the SL priority, and the RX UE may select one of a plurality of PQIs mapped to the L2 destination ID for the groupcast or the broadcast. The RX UE may select a PQI with the highest priority among the mapped PQIs, regardless of the received SCI. The RX UE may then select and use a SL DRX timer value of a SL DRX configuration mapped to the selected PQI. This may be interpreted to mean that the RX UE can select a SL DRX configuration (e.g., SL DRX timer value) of a PQI mapped to a different SL priority value (e.g., priority "b") than a SL priority value (e.g., priority "a") indicated in the received SCI.

Based on an embodiment of the present disclosure, the SCI may include an index value mapped to a PQI value, and the TX UE may transmit the SCI including the index value mapped to the PQI value to the RX UE. If there are multiple timer values (e.g., onduration timer values, inactivity timer values, retransmission timer values) based on PQIs, the RX UE may select one timer value to be used based on the PQI index included in the SCI.

For example, the RX UE may select and use a timer value of a configuration mapped to the PQI with the highest priority among SL priorities mapped to each PQI index included in each received SCI. For example, the RX UE may select and use a timer value of a configuration mapped to the PQI with the lowest priority among SL priorities mapped to each PQI index included in each received SCI.

For example, if the RX UE finds overlapping SL priorities among SL priorities mapped to each PQI index included in each received SCI, the RX UE may select and use the longest value of timer values of configurations mapped to each overlapping PQI with the highest priority.

For example, if each PQI index value included in each SCI is not independent value, i.e., if the same PQI value is found together (e.g., PQI 1, PQI 2, PQI 1), the RX UE may select a timer value of a SL DRX configuration mapped to a PQI with the highest SL priority. Alternatively, the RX UE may select a timer value of a SL DRX configuration mapped to a PQI with the lowest SL priority. Alternatively, the RX UE may select a timer value of a SL DRX configuration mapped to a PQI with the highest SL priority for the same PQI with a smaller PQI index. Alternatively, the RX UE may select a timer value of a SL DRX configuration mapped to a PQI with the lowest SL priority for the same PQI with a smaller PQI index. Alternatively, the RX UE may select a timer value of a SL DRX configuration mapped to a PQI with the highest SL priority for the same PQI with a larger PQI index. Alternatively, the RX UE may select a timer value of a SL DRX configuration mapped to a PQI with the lowest SL priority for the same PQI with a large PQI index. Alternatively, if the SL priority is also the same for the same PQI with a smaller PQI index, the RX UE may select and use a longer timer value. Alternatively, if the SL priority is also the same for the same PQI with a smaller PQI index, the RX UE may select and use a shorter timer value. Alternatively, if the SL priority is also the same for the same PQI with a larger PQI index, the RX UE may select and use a longer timer value. Alternatively, if the SL priority is also the same for the same PQI with a larger PQI index, the RX UE may select and use a shorter timer value.

For example, the RX UE may select and use the longest timer value among multiple SL DRX configurations mapped to multiple PQIs. For example, the RX UE may select and use the shortest timer value among multiple SL DRX configurations mapped to multiple PQIs.

Based on an embodiment of the present disclosure, a value of a SL DRX timer (e.g., onduration timer, inactivity timer, retransmission timer) may be selected based on the following method.

By the previously proposed operation, if there are each SL DRX timer mapped to each of multiple PQIs, the UE may select all SL DRX timer values mapped to each PQI and operate the SL DRX timer.

Alternatively, the following operation is also proposed.

If the receiving UE has successfully decoded sidelink data, the receiving UE may derive a logical channel ID of the successfully decoded MAC PDU. For example, if the receiving UE has successfully decoded sidelink data, the receiving UE may derive a logical channel ID of the successfully decoded MAC PDU because a MAC subheader includes the logical channel ID. Furthermore, the UE may track a QoS profile (e.g., PQI or PFI) mapped to the logical channel based on the obtained logical channel ID. If SDUs corresponding to the same logical channel ID are only multiplexed into the successfully decoded MAC PDU, the UE may select a value of a SL DRX timer mapped to a PQI (e.g., QoS profile) derived based on the logical channel ID and operate the SL DRX timer. If SDUs corresponding to a plurality of logical channel IDs are multiplexed into the successfully decoded MAC PDU, the UE may select all values of SL DRX timers mapped to a plurality of PQIs (e.g., QoS profiles) derived based on the plurality of logical channel IDs and operate the SL DRX timer. Alternatively, if SDUs corresponding to a plurality of logical channel IDs are multiplexed into the successfully decoded MAC PDU, the UE may select the longest value of SL DRX timers mapped to a plurality of PQIs (e.g., QoS profiles) derived based on the plurality of logical channel IDs and operate the SL DRX timer.

Alternatively, the following operation is also proposed.

If the receiving UE has successfully decoded sidelink data, the receiving UE may derive a 24-bit destination ID of the successfully decoded MAC PDU. The UE may also track a QoS profile (e.g., PQI or PFI) mapped to the obtained groupcast/broadcast 24-bit destination ID. Since the groupcast/broadcast 24-bit L2 destination ID is generated based on a service ID, it may be possible to derive a QoS profile (e.g., PQI) mapped to the groupcast/broadcast service based on the groupcast/broadcast 24-bit L2 destination ID. The UE may select a SL DRX timer value mapped to the derived QoS profile (e.g., PQI) and operate the SL DRX timer.

Based on an embodiment of the present disclosure, the RX UE may derive a QoS profile associated with a sidelink radio for a logical channel ID (or logical channel group ID) mapped to HARQ Feedback Enabled or HARQ Feedback Disabled, based on a HARQ feedback mode (e.g., HARQ Feedback Enabled Mode or HARQ Feedback Disabled Mode) indicated in the SCI. In addition, the RX UE may use a SL DRX inactivity timer (or a SL DRX onduration timer or a SL DRX retransmission timer) mapped to the derived QoS profile.

### 2. Method for selecting a cycle

If there are multiple DRX cycle values based on PQIs, the RX UE may select one cycle value to be used based on a SL priority included in the SCI. If the TX UE has multiple flows for the same groupcast/broadcast (e.g., the same L2 destination ID for the groupcast/broadcast) and the TX UE transmits a TB for each flow, the RX UE may receive SCI associated with each TB. Furthermore, there may be multiple PQIs for the same groupcast/broadcast (e.g., the same L2 destination ID for the groupcast/broadcast), and there may be a SL DRX configuration mapped to each PQI. Based on an embodiment of the present disclosure, if the RX UE receives SCI associated with a TB for multiple flows transmitted by the TX UE, the RX UE may select a value of a SL DRX cycle to be used based on information included in the SCI.

For example, the RX UE may backtrack a PQI based on the SL priority included in the received SCI. In this case, if the PQI mapped to each SL priority is an individual PQI value, the RX UE may select and use a SL DRX cycle of a SL DRX configuration mapped to the PQI with the shortest PDB. Alternatively, if the PQI mapped to each SL priority is an individual PQI value, the RX UE may select and use a SL DRX cycle of a SL DRX configuration mapped to the PQI with the longest PDB. If PQIs with the same PQI value are found, the RX UE may select and use a SL DRX cycle of a SL DRX configuration mapped to the PQI with the shortest PDB. If PQIs with the same PQI value are found, the RX UE may select and use a SL DRX cycle of a SL DRX configuration mapped to the PQI with the longest PDB.

For example, if the RX UE checks an L1 destination ID related to groupcast or broadcast included in the SCI and the remaining destination ID included in the MAC subheader, the RX UE may determine single or multiple PQIs mapped to an L2 destination ID related to groupcast or broadcast. In addition, the RX UE may determine a SL DRX configuration mapped to each PQI. In this case, if the PQI mapped to each SL priority is an individual PQI value, the RX UE may select and use a SL DRX cycle of a SL DRX configuration mapped to the PQI with the shortest PDB. Alternatively, if the PQI mapped to each SL priority is an individual PQI value, the RX UE may select and use a SL DRX cycle of a SL DRX configuration mapped to the PQI with the longest PDB. If PQIs with the same PQI value are found, the RX UE may select and use a SL DRX cycle of a SL DRX configuration mapped to the PQI with the shortest PDB. If PQIs with the same PQI value are found, the RX UE may select and use a SL DRX cycle of a SL DRX configuration mapped to the PQI with the longest PDB.

For example, the RX UE may backtrack a PQI based on the SL priority included in the received SCI. In this case, if the PQI mapped to each SL priority is an individual PQI value, the RX UE may select and use a SL DRX cycle of a SL DRX configuration mapped to the PQI with the highest priority. Alternatively, if the PQI mapped to each SL priority is an individual PQI value, the RX UE may select and use a SL DRX cycle of a SL DRX configuration mapped to the PQI with the lowest priority.

For example, if the RX UE checks an L1 destination ID related to groupcast or broadcast included in the SCI and the remaining destination ID included in the MAC subheader, the RX UE may determine single or multiple PQIs mapped to an L2 destination ID related to groupcast or broadcast. In addition, the RX UE may determine a SL DRX configuration mapped to each PQI. In this case, if the PQI mapped to each SL priority is an individual PQI value, the RX UE may select and use a SL DRX cycle of a SL DRX configuration mapped to the PQI with the highest priority. Alternatively, if the PQI mapped to each SL priority is an individual PQI value, the RX UE may select and use a SL DRX cycle of a SL DRX configuration mapped to the PQI with the lowest priority.

For example, the RX UE may backtrack a PQI based on the SL priority included in the received SCI. In this case, if overlapping PQI values are found among PQIs mapped to each SL priority, the RX UE may select and use a SL DRX cycle of a SL DRX configuration mapped to each PQI with the highest priority. Alternatively, if overlapping PQI values are found among PQIs mapped to each SL priority, the RX UE may select and use a SL DRX cycle of a SL DRX configuration mapped to each PQI with the lowest priority. Alternatively, if overlapping PQI values are found among PQIs mapped to each SL priority, the RX UE may select and use a SL DRX cycle of a SL DRX configuration mapped to the PQI with the shortest PDB. Alternatively, for example, the UE may select and use the shortest cycle value. For example, the UE may select and use the shortest cycle value among a plurality of cycles. Alternatively, if overlapping PQI values are found among PQIs mapped to each SL priority, the RX UE may select and use a SL DRX cycle of a SL DRX configuration mapped to the PQI with the longest PDB. Alternatively, for example, the UE may select and use the shortest cycle value. For example, the UE may select and use the shortest cycle value among a plurality of cycles.

For example, if the RX UE checks an L1 destination layer ID related to groupcast or broadcast included in the SCI and the remaining destination ID included in the MAC subheader, the RX UE may determine single or multiple PQIs mapped to an L2 destination ID related to groupcast or broadcast. In addition, the RX UE may determine a SL DRX configuration mapped to each PQI. In this case, if overlapping PQI values are found among PQIs mapped to each SL priority, the RX UE may select and use a SL DRX cycle of a SL DRX configuration mapped to each PQI with the highest priority. Alternatively, if overlapping PQI values are found among PQIs mapped to each SL priority, the RX UE may select and use a SL DRX cycle of a SL DRX configuration mapped to each PQI with the lowest priority. Alternatively, if overlapping PQI values are found among PQIs mapped to each SL priority, the RX UE may select and use a SL DRX cycle of a SL DRX configuration mapped to the PQI with the shortest PDB. Alternatively, for example, the UE may select and use the shortest cycle value. For example, the UE may select and use the shortest cycle value among a plurality of cycles. Alternatively, if overlapping PQI values are found among PQIs mapped to each SL priority, the RX UE may select and use a SL DRX cycle of a SL DRX configuration mapped to the PQI with the longest PDB. Alternatively, for example, the UE may select and use the shortest cycle value. For example, the UE may select and use the shortest cycle value among a plurality of cycles.

Based on an embodiment of the present disclosure, the SCI may include an index value mapped to a PQI value, and the TX UE may transmit the SCI including the index value mapped to the PQI value to the RX UE. If there are multiple DRX cycles based on PQIs, the RX UE may select one DRX cycle value to be used based on the PQI index included in the SCI.

For example, the RX UE may select and use a SL DRX cycle of a SL DRX configuration mapped to the shortest PDB among PDBs mapped to each PQI index included in each received SCI. Alternatively, for example, the RX UE may select and use a SL DRX cycle of a SL DRX configuration mapped to the longest PDB among PDBs mapped to each PQI index included in each received SCI.

For example, the RX UE may select and use the shortest DRX cycle of SL DRX configurations mapped to each PQI index included in each received SCI. Alternatively, for example, the RX UE may select and use the longest DRX cycle of SL DRX configurations mapped to each PQI index included in each received SCI.

For example, the RX UE may select and use a SL DRX cycles of a SL DRX configuration mapped to the PQI with the highest priority among SL priorities mapped to each PQI index included in each received SCI. Alternatively, for example, the RX UE may select and use a SL DRX cycle of a SL DRX configuration mapped to the PQI with the lowest priority among SL priorities mapped to each PQI index included in each received SCI. Alternatively, for example, the RX UE may select and use the longest SL DRX cycle.

The process of selecting the SL DRX cycle value by the RX UE proposed in the present disclosure may be performed based on information received through the SCI. The process of selecting the SL DRX cycle value by the RX UE proposed in the present disclosure may be performed based on information included in an RRC message received through the RRC message, rather than information received through the SCI. The process of selecting the SL DRX cycle value by the RX UE proposed in the present disclosure may be performed based on pre-configuration information, rather than information received through the SCI. For example, the RRC message may be a Uu RRC message transmitted by the base station to the UE. For example, the RRC message may include PQI index information mapped to an L2 destination ID related to groupcast or broadcast and/or SL priority information mapped to an L2 destination ID related to groupcast or broadcast. Furthermore, for example, the RRC message may include SL DRX configuration information mapped to each PQI. To this end, the UE performing the SL groupcast/broadcast communication may transfer, to the base station, an L2 destination ID related to groupcast/broadcast, a PQI for a groupcast/broadcast flow, SL priority for the groupcast/broadcast service information (or an L2 destination ID related to groupcast or broadcast, a SL DRX configuration for a groupcast/broadcast flow/PQI).

The following operation is also proposed as an alternative way to select a value of a SL DRX cycle.

By the previously proposed operation, if there are each SL DRX cycle value mapped to each of multiple PQIs, the UE may perform SL DRX operation by selecting/applying all SL DRX cycle values mapped to each PQI. That is, the UE may perform active time operation (e.g., monitoring PSCCH/PSSCH, transmitting PSCCH/PSSCH, or active mode operation) and/or inactive time operation (e.g., not monitoring PSCCH/PSSCH, not transmitting PSCCH/PSSCH, or sleep mode operation) in all SL DRX cycles.

Alternatively, the following operation is also proposed.

If the receiving UE has successfully decoded sidelink data, the receiving UE may derive a logical channel ID of the successfully decoded MAC PDU. For example, if the receiving UE has successfully decoded sidelink data, the receiving UE may derive a logical channel ID of the successfully decoded MAC PDU because a MAC subheader includes the logical channel ID. Furthermore, the UE may track a QoS profile (e.g., PQI or PFI) mapped to the logical channel based on the obtained logical channel ID. If SDUs corresponding to the same logical channel ID are only multiplexed into the successfully decoded MAC PDU, the UE may select a value of a SL DRX cycle mapped to a PQI (e.g., QoS profile) derived based on the logical channel ID and operate the SL DRX timer. If SDUs corresponding to a plurality of logical channel IDs are multiplexed into the successfully decoded MAC PDU, the UE may select all values of SL DRX cycles mapped to a plurality of PQIs (e.g., QoS profiles) derived based on the plurality of logical channel IDs and operate the SL DRX timer. That is, the UE may perform active time operation (e.g., monitoring PSCCH/PSSCH, transmitting PSCCH/PSSCH, or active mode operation) and/or inactive time operation (e.g., not monitoring PSCCH/PSSCH, not transmitting PSCCH/PSSCH, or sleep mode operation) in all SL DRX cycles. Alternatively, if SDUs corresponding to a plurality of logical channel IDs are multiplexed into the successfully decoded MAC PDU, the UE may select the longest value of SL DRX cycles mapped to a plurality of PQIs (e.g., QoS profiles) derived based on the plurality of logical channel IDs and operate the SL DRX timer.

Alternatively, the following operation is also proposed.

If the receiving UE has successfully decoded sidelink data, the receiving UE may derive a 24-bit destination ID of the successfully decoded MAC PDU. The UE may also track a QoS profile (e.g., PQI or PFI) mapped to the obtained groupcast/broadcast 24-bit destination ID. Since the groupcast/broadcast 24-bit L2 destination ID is generated based on a service ID, it may be possible to derive a QoS profile (e.g., PQI) mapped to the groupcast/broadcast service based on the groupcast/broadcast 24-bit L2 destination ID. The UE may select a SL DRX cycle value mapped to the derived QoS profile (e.g., PQI) and operate the SL DRX timer.

In the present disclosure, it is proposed that the RX UE selects a value of a SL DRX timer and a value of a SL DRX cycle based on the following information.
- 24-bit L2 Destination ID for groupcast/broadcast
- 16-bit L1 Destination ID for groupcast/broadcast in SCI
- 8-bit remaining destination ID for groupcast/broadcast in MAC subheader
- PQI
- SL priority
- SL DRX configuration mapped to PQI

Based on an embodiment of the present disclosure, if there are a plurality of SL DRX cycles mapped to a plurality of QoS profiles associated with the same L2 destination ID, the RX UE may select one SL DRX cycle and apply it to SL DRX operation. In this case, based on an embodiment of the present disclosure, the RX UE may derive a minimum common multiple of values of the plurality of SL DRX cycles and apply the derived minimum common multiple to a SL DRX cycle.

The plurality of cycles may have a mutual inclusion (or subset) relationship, or the plurality of cycles may have a relationship such that the shortest cycle of the plurality of cycles (and/or a cycle based on a minimum common multiple derived from the plurality of cycles) includes the longest cycle (or all remaining cycles) (and/or the plurality of cycles may have a relationship such that the shortest cycle of the plurality of cycles (and/or a cycle based on a minimum common multiple derived from the plurality of cycles) includes the longest cycle (or all remaining cycles) as a subset). Herein, for example, the plurality of cycles may be interpreted as a plurality of QoS profile-related cycles associated with one (L2 or L1) destination ID (and/or source ID).

Based on an embodiment of the present disclosure, if the receiving UE only succeeds in decoding the SCI and fails to decode the MAC PDU, the receiving UE may infer a SL DRX configuration (SL DRX onduration timer, SL DRX cycle, SL DRX inactivity timer, SL DRX retransmission timer) based on an L1 destination ID. Through this, the receiving UE may select the configuration to be used for SL DRX operation. That is, if the receiving UE succeeds in decoding the SCI but fails to decode the MAC PDU, the receiving UE may obtain an L2 destination ID (groupcast/broadcast service of interest) that includes an L1 destination ID included in the SCI as partial bits. The receiving UE may obtain SL DRX configuration(s) (SL DRX onduration timer, SL DRX cycle, SL DRX inactivity timer, SL DRX retransmission timer) mapped to QoS profile(s) associated with the L2 destination ID (groupcast/broadcast service of interest) that includes the L1 destination ID included in the SCI as partial bits. For example, the receiving UE may select a SL DRX onduration timer value with the largest value among obtained multiple SL DRX onduration timer values, and the receiving UE may start the selected SL DRX onduration timer. For example, the receiving UE may select a SL DRX inactivity timer value with the largest value among obtained multiple SL DRX inactivity timer values, and the receiving UE may start the selected SL DRX inactivity timer. For example, the receiving UE may select a SL DRX retransmission timer value with the largest value among obtained multiple SL DRX retransmission timer values, and the receiving UE may start the selected SL DRX retransmission timer. Furthermore, the receiving UE may select a SL DRX cycle value with the smallest value among obtained multiple SL DRX cycle values, and the receiving UE may apply the selected SL DRX cycle.

Based on an embodiment of the present disclosure, the UE may perform SL DRX onduration timer operation by selecting the largest SL DRX onduration timer value among SL DRX onduration timer values mapped to all QoS profiles associated with the same L2 destination ID. In addition, if the UE selects the largest SL DRX onduration timer value among onduration timer values mapped to all QoS profiles associated with the same L2 destination ID, the UE may perform SL DRX operation by selecting a SL DRX cycle included in a SL DRX configuration that includes the selected SL DRX onduration timer value. If there are a plurality of SL DRX configurations that include the selected SL DRX onduration timer value, the UE may perform SL DRX operation by selecting the smallest SL DRX cycle value among SL DRX cycles included in the plurality of SL DRX configurations. If there are a plurality of SL DRX configurations that include the selected SL DRX onduration timer value, the UE may perform SL DRX operation by selecting the largest SL DRX cycle value among SL DRX cycles included in the plurality of SL DRX configurations. If there are a plurality of SL DRX configurations that include the selected SL DRX onduration timer value, the UE may perform SL DRX operation (SL DRX cycle and SL DRX onduration timer operation) by selecting a SL DRX configuration that includes the smallest SL DRX cycle value among SL DRX cycles included in the plurality of SL DRX configurations. If there are a plurality of SL DRX configurations that include the selected SL DRX onduration timer value, the UE may perform SL DRX operation (SL DRX cycle and SL DRX onduration timer operation) by selecting a SL DRX configuration that includes the largest SL DRX cycle value among SL DRX cycles included in the plurality of SL DRX configurations.

Based on an embodiment of the present disclosure, the UE may perform SL DRX operation by selecting the shortest SL DRX cycle value among SL DRX cycle values mapped to all QoS profiles associated with the same L2 destination ID. In addition, if the UE selects the shortest SL DRX cycle value among SL DRX cycle values mapped to all QoS profiles associated with the same L2 destination ID, the UE may perform SL DRX onduration timer operation by selecting a SL DRX onduration timer included in a SL DRX configuration that includes the selected SL DRX cycle value. If there are a plurality of SL DRX configurations that include the selected SL DRX cycle value, the UE may perform SL DRX onduration timer operation by selecting the largest SL DRX onduration timer value among SL DRX onduration timer values included in the plurality of SL DRX configurations. If there are a plurality of SL DRX configurations that include the selected SL DRX cycle value, the UE may perform SL DRX onduration timer operation by selecting the smallest SL DRX onduration timer value among SL DRX onduration timer values included in the plurality of SL DRX configurations. If there are a plurality of SL DRX configurations that include the selected SL DRX cycle value, the UE may perform SL DRX operation (cycle operation and onduration timer operation) by selecting a SL DRX configuration that includes the largest SL DRX onduration timer value among SL DRX onduration timer values included in the plurality of SL DRX configurations. If there are a plurality of SL DRX configurations that include the selected SL DRX cycle value, the UE may perform SL DRX operation (cycle operation and onduration timer operation) by selecting a SL DRX configuration that includes the smallest SL DRX onduration timer value among SL DRX onduration timer values included in the plurality of SL DRX configurations.

Based on an embodiment of the present disclosure, the UE may select a SL DRX cycle, a SL DRX onduration timer, or a SL DRX configuration as described below.

The UE (receiving UE or transmitting UE) that receives or transmits groupcast/broadcast data should select a SL DRX cycle, a SL DRX onduration timer, or a SL DRX configuration to be used for SL DRX operation. In the present disclosure, proposed is a method for the UE to selects one by down-selecting SL DRX cycles, SL DRX onduration timers, or SL DRX configurations to be used for SL DRX operation, or to use multiple SL DRX cycles, multiple SL DRX onduration timers, or multiple SL DRX configurations.

For example, when a Tx profile is transferred from a higher layer (V2X layer) of the UE to an AS layer, and if the Tx profile indicates groupcast/broadcast supporting SL DRX, it may indicates whether a single SL DRX cycle, a single SL DRX onduration timer, or a single SL DRX configuration (per L2 destination ID) should be used or multiple (N) SL DRX cycles, multiple (N) SL DRX onduration timers, or multiple (N) SL DRX configurations should be used.

Alternatively, when a Tx profile is transferred from a higher layer of the UE to an AS layer, a single SL DRX cycle value and a single SL DRX onduration timer value to be used by the RX UE (RX UE interested in groupcast, broadcast services) may be directly indicated, and this may be transferred (e.g. through system information message).

Alternatively, when a Tx profile is transferred from a higher layer of the UE to an AS layer, multiple SL DRX cycle values and multiple SL DRX onduration timer values to be used by the RX UE (RX UE interested in groupcast and broadcast services) may be directly indicated, and this may be transferred (e.g. through system information message).

When a Tx profile is transferred from a higher layer of the UE to an AS layer, if it is instructed to perform SL DRX operation using a single SL DRX cycle, a single SL DRX onduration timer, or a single SL DRX configuration, the UE may select a single SL DRX cycle, a single SL DRX onduration timer, or a single SL DRX configuration by using the method proposed in the present disclosure.

When a Tx profile is transferred from a higher layer of the UE to an AS layer, if it is instructed to perform SL DRX operation using multiple (N) SL DRX cycles, multiple (N) SL DRX onduration timers, or multiple (N) SL DRX configurations (e.g., N less than the number of multiple QoS profiles associated with a groupcast/broadcast L2 destination ID), the UE may select N most stringent (strict or tight) QoS profiles among the multiple QoS profiles associated with the groupcast/broadcast L2 destination ID, and the UE may perform SL DRX operation using each of SL DRX cycles or SL DRX onduration timers or SL DRX configurations mapped to the N QoS profiles.

Based on an embodiment of the present disclosure, for the RX UE operating sidelink DRX for groupcast/broadcast services, the base station may configure whether the RX UE should use a single SL DRX cycle, a single SL DRX onduration timer, or a single SL DRX configuration per L2 destination ID or multiple (N) SL DRX cycles, multiple (N) SL DRX onduration timers, or multiple (N) SL DRX configurations per L2 destination ID, and the base station may transmit this through system information.

The RX UE may report, to the base station, L2 destination ID(s), QoS profile(s), and/or cast type(s) information for sidelink groupcast/broadcast service(s) that it is interested in receiving. Based on the L2 destination ID(s), the QoS profile(s), and the cast type(s) information for the sidelink groupcast/broadcast service(s) received from the RX UE, the base station may configure whether the RX UE should use a single SL DRX cycle, a single SL DRX onduration timer, or a single SL DRX configuration per L2 destination ID or multiple (N) SL DRX cycles, multiple (N) SL DRX onduration timers, or multiple (N) SL DRX configurations per L2 destination ID, for the RX UE operating sidelink DRX for groupcast/broadcast services.

Alternatively, the base station may directly specify a single SL DRX cycle value, a single SL DRX onduration timer value, an onduration timer value, or a single SL DRX configuration (mapped to a single QoS profile) to be used by the RX UE (RX UE interested in groupcast, broadcast services) and transmit it to the RX UE (e.g., through a system information message).

Alternatively, the base station may directly specify multiple SL DRX cycle values, multiple SL DRX onduration timer values, or multiple SL DRX configurations (mapped to multiple QoS profiles) to be used by the RX UE (RX UE interested in groupcast, broadcast services) and transmit it to the RX UE (e.g., through a system information message).

If the base station configures the RX UE to perform SL DRX operation using a single SL DRX cycle, a single SL DRX onduration timer, or a single SL DRX configuration, the UE may select a single SL DRX cycle, a single SL DRX onduration timer, or a single SL DRX configuration using the method proposed in the present disclosure (selecting one of multiple SL DRX cycles and multiple SL DRX onduration timers).

If the base station configures the RX UE to perform SL DRX operation using multiple (N) SL DRX cycles, multiple (N) SL DRX onduration timers, or multiple (N) SL DRX configurations (e.g., N less than the number of multiple QoS profiles associated with a groupcast/broadcast L2 destination ID), the UE may select N most stringent (strict or tight) QoS profiles among the multiple QoS profiles associated with the groupcast/broadcast L2 destination ID, and the UE may perform SL DRX operation using each of SL DRX cycles or SL DRX onduration timers or SL DRX configurations mapped to the N QoS profiles.

Alternatively, if the RX UE (RX UE interested in groupcast, broadcast services) receives a single SL DRX cycle value, a single SL DRX onduration timer value, or a single SL DRX configuration to be used from the base station (e.g., through a system information message), the RX UE may perform SL DRX operation using the configured single SL DRX cycle value, the configured single SL DRX onduration timer value, or the configured SL DRX configuration.

Alternatively, if the RX UE (RX UE interested in groupcast, broadcast services) receives multiple SL DRX cycle values, multiple SL DRX onduration timer values, or multiple SL DRX configurations to be used from the base station (e.g., through a system information message), the RX UE may perform SL DRX operation using the configured multiple SL DRX cycle values, the configured multiple SL DRX onduration timer values, or the configured multiple SL DRX configurations.

The solution proposed in the present disclosure may be extended to HARQ feedback enabled transmission and HARQ feedback disabled transmission as follows.

That is, when the RX UE selects a value of a SL DRX timer based on the method proposed in the present disclosure, and the RX UE determines HARQ feedback enabled transmission in SCI, the RX UE may extend the timer value by the HARQ RTT timer from the selected timer value.

The various embodiments of the present disclosure are described from the perspective of the operation of the RX UE. The procedure for selecting the value of the SL DRX timer and the value of the SL DRX cycle to be used by the RX UE proposed in the present disclosure may be equally performed by the TX UE to synchronize the procedure for selecting the value of the SL DRX timer and the value of the SL DRX cycle to be used by the RX UE (e.g., to synchronize the SL DRX operation). For example, the TX UE may select/determine the value of the SL DRX timer and the value of the SL DRX cycle based on information included in transmitted SCI (e.g., SL priority, PQI index) or PQI information mapped to an L2 destination ID included in transmitted SCI.

The proposal of the present disclosure can be applied/extended to/as a method of solving a problem in which loss occurs due to interruption which occurs during Uu BWP switching. In addition, in the case of a plurality of SL BWPs being supported for the UE, the proposal of the present disclosure can be applied/extended to/as a method of solving a problem in which loss occurs due to interruption which occurs during SL BWP switching.

The proposal of the present disclosure can be applied/extended to/as UE-pair specific SL DRX configuration(s), UE-pair specific SL DRX pattern(s) or parameter(s) (e.g., timer) included in UE-pair specific SL DRX configuration(s), as well as default/common SL DRX configuration(s), default/common SL DRX pattern(s), or parameter(s) (e.g., timer) included in default/common SL DRX configuration(s). In addition, the on-duration mentioned in the proposal of the present disclosure may be extended to or interpreted as an active time (e.g., time to wake-up state (e.g., RF module turned on) to receive/transmit radio signal(s)) duration, and the off-duration may be extended to or interpreted as a sleep time (e.g., time to sleep in sleep mode state (e.g., RF module turned off) to save power) duration. It does not mean that the TX UE is obligated to operate in the sleep mode in the sleep time duration. If necessary, the TX UE may be allowed to operate in an active time for a while for a sensing operation and/or a transmission operation, even if it is a sleep time.

For example, whether or not the (some) proposed method/rule of the present disclosure is applied and/or related parameter(s) (e.g., threshold value(s)) may be configured specifically (or differently or independently) for each resource pool. For example, whether or not the (some) proposed method/rule of the present disclosure is applied and/or related parameter(s) (e.g., threshold value(s)) may be configured specifically (or differently or independently) for each congestion level. For example, whether or not the (some) proposed method/rule of the present disclosure is applied and/or related parameter(s) (e.g., threshold value(s)) may be configured specifically (or differently or independently) for each service priority. For example, whether or not the (some) proposed method/rule of the present disclosure is applied and/or related parameter(s) (e.g., threshold value(s)) may be configured specifically (or differently or independently) for each service type. For example, whether or not the (some) proposed method/rule of the present disclosure is applied and/or related parameter(s) (e.g., threshold value(s)) may be configured specifically (or differently or independently) for each resource pool. For example, whether or not the (some) proposed method/rule of the present disclosure is applied and/or related parameter(s) (e.g., threshold value(s)) may be configured specifically (or differently or independently) for each QoS requirement (e.g., latency, reliability). For example, whether or not the (some) proposed method/rule of the present disclosure is applied and/or related parameter(s) (e.g., threshold value(s)) may be configured specifically (or differently or independently) for each PQI (5G QoS identifier (5QI) for PC5). For example, whether or not the (some) proposed method/rule of the present disclosure is applied and/or related parameter(s) (e.g., threshold value(s)) may be configured specifically (or differently or independently) for each traffic type (e.g., periodic generation or aperiodic generation). For example, whether or not the (some) proposed method/rule of the present disclosure is applied and/or related parameter(s) (e.g., threshold value(s)) may be configured specifically (or differently or independently) for each SL transmission resource allocation mode (e.g., mode 1 or mode 2).

For example, whether or not the proposed rule of the present disclosure is applied and/or related parameter configuration value(s) may be configured specifically (or differently or independently) for each resource pool. For example, whether or not the proposed rule of the present disclosure is applied and/or related parameter configuration value(s) may be configured specifically (or differently or independently) for each service/packet type. For example, whether or not the proposed rule of the present disclosure is applied and/or related parameter configuration value(s) may be configured specifically (or differently or independently) for each service/packet priority. For example, whether or not the proposed rule of the present disclosure is applied and/or related parameter configuration value(s) may be configured specifically (or differently or independently) for each QoS requirement (e.g., URLLC/EMBB traffic, reliability, latency). For example, whether or not the proposed rule of the present disclosure is applied and/or related parameter configuration value(s) may be configured specifically (or differently or independently) for each PQI. For example, whether or not the proposed rule of the present disclosure is applied and/or related parameter configuration value(s) may be configured specifically (or differently or independently) for each PFI. For example, whether or not the proposed rule of the present disclosure is applied and/or related parameter configuration value(s) may be configured specifically (or differently or independently) for each cast type (e.g., unicast, groupcast, broadcast). For example, whether or not the proposed rule of the present disclosure is applied and/or related parameter configuration value(s) may be configured specifically (or differently or independently) for each (resource pool) congestion level (e.g., CBR). For example, whether or not the proposed rule of the present disclosure is applied and/or related parameter configuration value(s) may be configured specifically (or differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or pre-emption-based resource reselection. For example, whether or not the proposed rule of the present disclosure is applied and/or related parameter configuration value(s) may be configured specifically (or differently or independently) for re-evaluation or re-evaluation-based resource reselection. For example, whether or not the proposed rule of the present disclosure is applied and/or related parameter configuration value(s) may be configured specifically (or differently or independently) for each (L2 or L1) (source and/or destination) identifier. For example, whether or not the proposed rule of the present disclosure is applied and/or related parameter configuration value(s) may be configured specifically (or differently or independently) for each (L2 or L1) (a combination of source ID and destination ID) identifier. For example, whether or not the proposed rule of the present disclosure is applied and/or related parameter configuration value(s) may be configured specifically (or differently or independently) for each (L2 or L1) (a combination of a pair of source ID and destination ID and a cast type) identifier. For example, whether or not the proposed rule of the present disclosure is applied and/or related parameter configuration value(s) may be configured specifically (or differently or independently) for each direction of a pair of source layer ID and destination layer ID. For example, whether or not the proposed rule of the present disclosure is applied and/or related parameter configuration value(s) may be configured specifically (or differently or independently) for each PC5 RRC connection/link. For example, whether or not the proposed rule of the present disclosure is applied and/or related parameter configuration value(s) may be configured specifically (or differently or independently) for the case of performing SL DRX. For example, whether or not the proposed rule of the present disclosure is applied and/or related parameter configuration value(s) may be configured specifically (or differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation.

The certain time mentioned in the proposal of the present disclosure may refer to a time during which a UE operates in an active time for a pre-defined time in order to receive sidelink signal(s) or sidelink data from a counterpart UE. The certain time mentioned in the proposal of the present disclosure may refer to a time during which a UE operates in an active time as long as a specific timer (e.g., sidelink DRX retransmission timer, sidelink DRX inactivity timer, or timer to ensure that an RX UE can operate in an active time in a DRX operation of the RX UE) is running in order to receive sidelink signal(s) or sidelink data from a counterpart UE. In addition, the proposal and whether or not the proposal rule of the present disclosure is applied (and/or related parameter configuration value(s)) may also be applied to a mmWave SL operation.

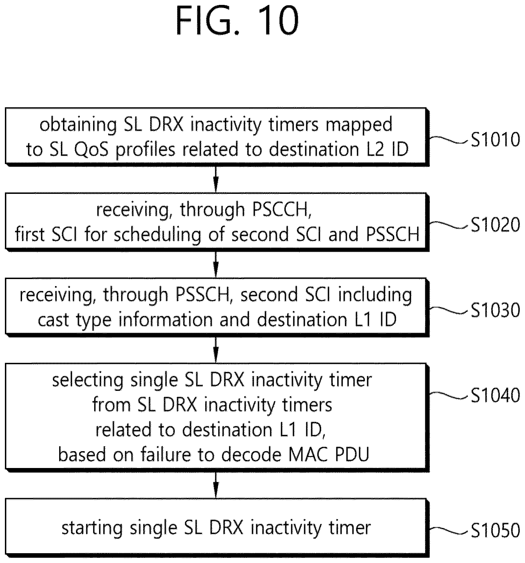

FIG. 10 shows a method for a first device to perform wireless communication, based on an embodiment of the present disclosure. The embodiment of FIG. 10 may be combined with various embodiments of the present disclosure.

Referring to FIG. 10, in step S1010, the first device may obtain a plurality of sidelink (SL) DRX inactivity timers mapped to a plurality of SL quality of service (QoS) profiles related to a destination layer-2 (L2) identifier (ID). In step S1020, the first device may receive, through a physical sidelink control channel (PSCCH), first sidelink control information (SCI) for scheduling of second SCI and a physical sidelink shared channel (PSSCH). In step S1030, the first device may receive, through the PSSCH, the second SCI including cast type information and a destination layer-1 (L1) ID. In step S1040, the first device may select a single SL DRX inactivity timer from the plurality of SL DRX inactivity timers related to the destination L1 ID, based on a failure to decode a medium access control (MAC) protocol data unit (PDU). In step S1050, the first device may start the single SL DRX inactivity timer. For example, the single SL DRX inactivity timer may be a SL DRX inactivity timer with the longest length of the plurality of SL DRX inactivity timers.

For example, the destination L2 ID may be 24 bits and the destination L1 ID may be 16 bits.

For example, based on the destination L1 ID matching 16 least significant bits (LSB) of the destination L2 ID, the single SL DRX inactivity timer may be selected from the plurality of SL DRX inactivity timers related to the destination L2 ID.

For example, the single SL DRX inactivity timer may be started in a slot following a slot in which the first SCI and the second SCI are received.

For example, based on successful decoding of the MAC PDU, the single SL DRX inactivity timer may be selected from the plurality of SL DRX inactivity timers related to the destination L2 ID. For example, the destination L2 ID may be obtained based on the destination L1 ID included in the second SCI and a destination field included in the MAC PDU.

For example, the first device may be a device interested in receiving data related to the destination L2 ID based on groupcast.

For example, the cast type information may be set to groupcast.

For example, information related to the plurality of SL DRX inactivity timers may be included in a plurality of SL DRX configurations mapped to the plurality of SL QoS profiles.

Additionally, for example, the first device may monitor SCI within a time while the single SL DRX inactivity timer is running.

For example, the plurality of SL QoS profiles may be related to a plurality of PC5 QoS identifiers (PQIs), respectively.

For example, the plurality of SL DRX inactivity timers may be configured for the first device.

For example, a time while the single SL DRX inactivity timer is running may be included in an active time of the first device.

The proposed method may be applied to the device(s) based on various embodiments of the present disclosure. First, the processor 102 of the first device 100 may obtain a plurality of sidelink (SL) DRX inactivity timers mapped to a plurality of SL quality of service (QoS) profiles related to a destination layer-2 (L2) identifier (ID). In addition, the processor 102 of the first device 100 may control the transceiver 206 to receive, through a physical sidelink control channel (PSCCH), first sidelink control information (SCI) for scheduling of second SCI and a physical sidelink shared channel (PSSCH). In addition, the processor 102 of the first device 100 may control the transceiver 206 to receive, through the PSSCH, the second SCI including cast type information and a destination layer-1 (L1) ID. In addition, the processor 102 of the first device 100 may select a single SL DRX inactivity timer from the plurality of SL DRX inactivity timers related to the destination L1 ID, based on a failure to decode a medium access control (MAC) protocol data unit (PDU). In addition, the processor 102 of the first device 100 may start the single SL DRX inactivity timer. For example, the single SL DRX inactivity timer may be a SL DRX inactivity timer with the longest length of the plurality of SL DRX inactivity timers.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: obtain a plurality of sidelink (SL) DRX inactivity timers mapped to a plurality of SL quality of service (QoS) profiles related to a destination layer-2 (L2) identifier (ID); control the one or more transceivers to receive, through a physical sidelink control channel (PSCCH), first sidelink control information (SCI) for scheduling of second SCI and a physical sidelink shared channel (PSSCH); control the one or more transceivers to receive, through the PSSCH, the second SCI including cast type information and a destination layer-1 (L1) ID; select a single SL DRX inactivity timer from the plurality of SL DRX inactivity timers related to the destination L1 ID, based on a failure to decode a medium access control (MAC) protocol data unit (PDU); and start the single SL DRX inactivity timer. For example, the single SL DRX inactivity timer may be a SL DRX inactivity timer with the longest length of the plurality of SL DRX inactivity timers.

Based on an embodiment of the present disclosure, a processing device adapted to control a first device may be provided. For example, the processing device may comprise: one or more processors; and one or more memories operably connected to the one or more processors and storing instructions. For example, the one or more processors may execute the instructions to: obtain a plurality of sidelink (SL) DRX inactivity timers mapped to a plurality of SL quality of service (QoS) profiles related to a destination layer-2 (L2) identifier (ID); receive, through a physical sidelink control channel (PSCCH), first sidelink control information (SCI) for scheduling of second SCI and a physical sidelink shared channel (PSSCH); receive, through the PSSCH, the second SCI including cast type information and a destination layer-1 (L1) ID; select a single SL DRX inactivity timer from the plurality of SL DRX inactivity timers related to the destination L1 ID, based on a failure to decode a medium access control (MAC) protocol data unit (PDU); and start the single SL DRX inactivity timer. For example, the single SL DRX inactivity timer may be a SL DRX inactivity timer with the longest length of the plurality of SL DRX inactivity timers.

Based on an embodiment of the present disclosure, a non-transitory computer-readable storage medium storing instructions may be provided. For example, the instructions, when executed, may cause a first device to: obtain a plurality of sidelink (SL) DRX inactivity timers mapped to a plurality of SL quality of service (QoS) profiles related to a destination layer-2 (L2) identifier (ID); receive, through a physical sidelink control channel (PSCCH), first sidelink control information (SCI) for scheduling of second SCI and a physical sidelink shared channel (PSSCH); receive, through the PSSCH, the second SCI including cast type information and a destination layer-1 (L1) ID; select a single SL DRX inactivity timer from the plurality of SL DRX inactivity timers related to the destination L1 ID, based on a failure to decode a medium access control (MAC) protocol data unit (PDU); and start the single SL DRX inactivity timer. For example, the single SL DRX inactivity timer may be a SL DRX inactivity timer with the longest length of the plurality of SL DRX inactivity timers.

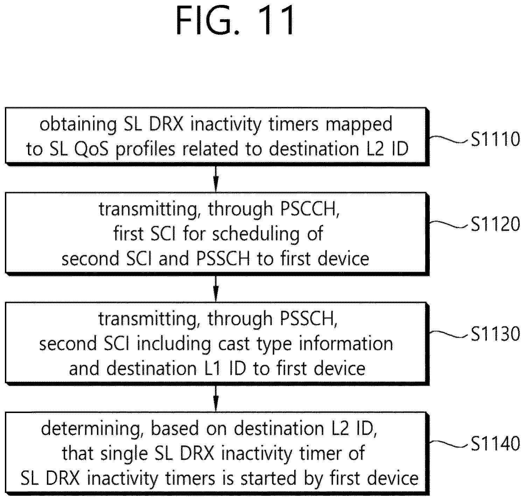

FIG. 11 shows a method for a second device to perform wireless communication, based on an embodiment of the present disclosure. The embodiment of FIG. 11 may be combined with various embodiments of the present disclosure.

Referring to FIG. 11, in step S1110, the second device may obtain a plurality of sidelink (SL) DRX inactivity timers mapped to a plurality of SL quality of service (QoS) profiles related to a destination layer-2 (L2) identifier (ID). In step S1120, the second device may transmit, through a physical sidelink control channel (PSCCH), first sidelink control information (SCI) for scheduling of second SCI and a physical sidelink shared channel (PSSCH) to a first device. In step S1130, the second device may transmit, through the PSSCH, the second SCI including cast type information and a destination layer-1 (L1) ID to the first device. In step S1140, the second device may determine, based on the destination L2 ID, that a single SL DRX inactivity timer of the plurality of SL DRX inactivity timers is started by the first device. For example, based on the first device failing to decode a medium access control (MAC) protocol data unit (PDU), the single SL DRX inactivity timer may be selected by the first device from the plurality of SL DRX inactivity timers related to the destination L1 ID. For example, the single SL DRX inactivity timer may be a SL DRX inactivity timer with the longest length of the plurality of SL DRX inactivity timers.

The proposed method may be applied to the device(s) based on various embodiments of the present disclosure. First, the processor 202 of the second device 200 may obtain a plurality of sidelink (SL) DRX inactivity timers mapped to a plurality of SL quality of service (QoS) profiles related to a destination layer-2 (L2) identifier (ID). In addition, the processor 202 of the second device 200 may control the transceiver 206 to transmit, through a physical sidelink control channel (PSCCH), first sidelink control information (SCI) for scheduling of second SCI and a physical sidelink shared channel (PSSCH) to a first device. In addition, the processor 202 of the second device 200 may control the transceiver 206 to transmit, through the PSSCH, the second SCI including cast type information and a destination layer-1 (L1) ID to the first device. In addition, the processor 202 of the second device 200 may determine, based on the destination L2 ID, that a single SL DRX inactivity timer of the plurality of SL DRX inactivity timers is started by the first device. For example, based on the first device failing to decode a medium access control (MAC) protocol data unit (PDU), the single SL DRX inactivity timer may be selected by the first device from the plurality of SL DRX inactivity timers related to the destination L1 ID. For example, the single SL DRX inactivity timer may be a SL DRX inactivity timer with the longest length of the plurality of SL DRX inactivity timers.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: obtain a plurality of sidelink (SL) DRX inactivity timers mapped to a plurality of SL quality of service (QoS) profiles related to a destination layer-2 (L2) identifier (ID); control the one or more transceivers to transmit, through a physical sidelink control channel (PSCCH), first sidelink control information (SCI) for scheduling of second SCI and a physical sidelink shared channel (PSSCH) to a first device; control the one or more transceivers to transmit, through the PSSCH, the second SCI including cast type information and a destination layer-1 (L1) ID to the first device; and determine, based on the destination L2 ID, that a single SL DRX inactivity timer of the plurality of SL DRX inactivity timers is started by the first device. For example, based on the first device failing to decode a medium access control (MAC) protocol data unit (PDU), the single SL DRX inactivity timer may be selected by the first device from the plurality of SL DRX inactivity timers related to the destination L1 ID. For example, the single SL DRX inactivity timer may be a SL DRX inactivity timer with the longest length of the plurality of SL DRX inactivity timers.

Based on an embodiment of the present disclosure, a processing device adapted to control a second device may be provided. For example, the processing device may comprise: one or more processors; and one or more memories operably connected to the one or more processors and storing instructions. For example, the one or more processors may execute the instructions to: obtain a plurality of sidelink (SL) DRX inactivity timers mapped to a plurality of SL quality of service (QoS) profiles related to a destination layer-2 (L2) identifier (ID); transmit, through a physical sidelink control channel (PSCCH), first sidelink control information (SCI) for scheduling of second SCI and a physical sidelink shared channel (PSSCH) to a first device; transmit, through the PSSCH, the second SCI including cast type information and a destination layer-1 (L1) ID to the first device; and determine, based on the destination L2 ID, that a single SL DRX inactivity timer of the plurality of SL DRX inactivity timers is started by the first device. For example, based on the first device failing to decode a medium access control (MAC) protocol data unit (PDU), the single SL DRX inactivity timer may be selected by the first device from the plurality of SL DRX inactivity timers related to the destination L1 ID. For example, the single SL DRX inactivity timer may be a SL DRX inactivity timer with the longest length of the plurality of SL DRX inactivity timers.

Based on an embodiment of the present disclosure, a non-transitory computer-readable storage medium storing instructions may be provided. For example, the instructions, when executed, may cause a second device to: obtain a plurality of sidelink (SL) DRX inactivity timers mapped to a plurality of SL quality of service (QoS) profiles related to a destination layer-2 (L2) identifier (ID); transmit, through a physical sidelink control channel (PSCCH), first sidelink control information (SCI) for scheduling of second SCI and a physical sidelink shared channel (PSSCH) to a first device; transmit, through the PSSCH, the second SCI including cast type information and a destination layer-1 (L1) ID to the first device; and determine, based on the destination L2 ID, that a single SL DRX inactivity timer of the plurality of SL DRX inactivity timers is started by the first device. For example, based on the first device failing to decode a medium access control (MAC) protocol data unit (PDU), the single SL DRX inactivity timer may be selected by the first device from the plurality of SL DRX inactivity timers related to the destination L1 ID. For example, the single SL DRX inactivity timer may be a SL DRX inactivity timer with the longest length of the plurality of SL DRX inactivity timers.

Based on various embodiments of the present disclosure, the RX UE and/or the TX UE may select/determine a value of a timer and/or a value of a cycle to be used for SL DRX operation among a plurality of SL DRX configurations. By allowing the TX UE and/or the RX UE to select/determine the value of the timer and/or the value of the cycle to be used for the SL DRX operation based on the same rule, the power saving gain can be achieved while ensuring the reliability of SL communication. Specifically, the RX UE and/or the TX UE may select the cycle with the shortest value among the plurality of cycles, and the RX UE and/or the TX UE may select the timer with the longest value among the plurality of timers (e.g., timers for active time). This allows the UE performing the SL DRX operation to keep active for the longest possible time. Thus, the RX UE and/or TX UE can obtain power saving gain from the SL DRX operation while ensuring the reliability of the SL communication.

Furthermore, even if the RX UE fails to decode the MAC PDU, the RX UE can use the destination L1 ID included in the SCI to start the SL DRX timer (e.g., SL DRX inactivity timer). Thus, even if the RX UE does not fully obtain the destination L2 ID, timers for active time can be aligned between the TX UE and the RX UE. This can provide the power saving gain while ensuring the reliability of SL communication between the TX UE and the RX UE.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

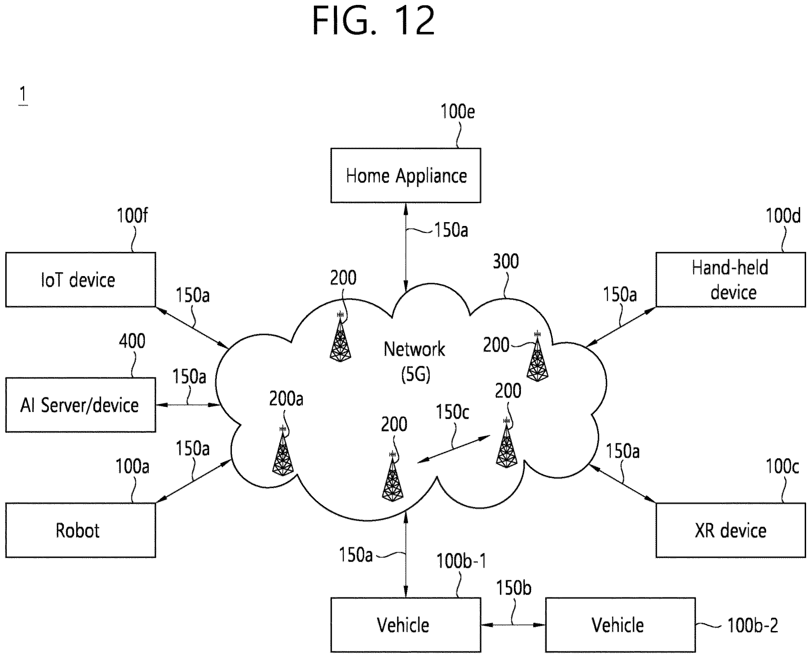

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB 1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

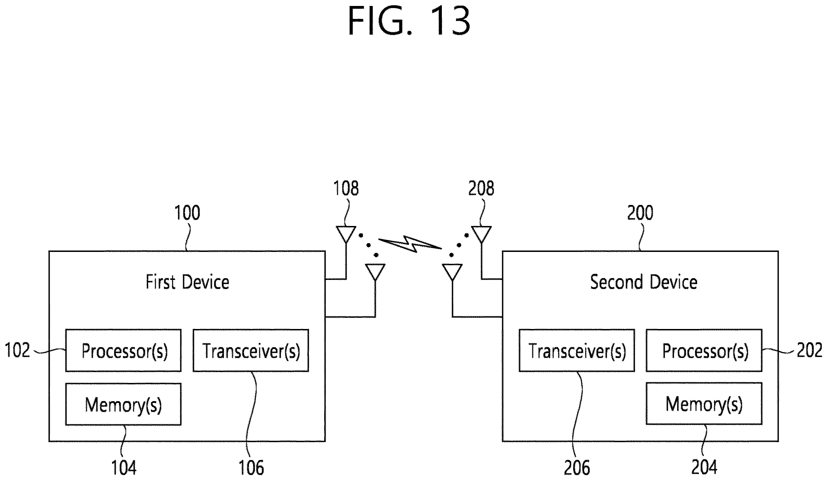

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

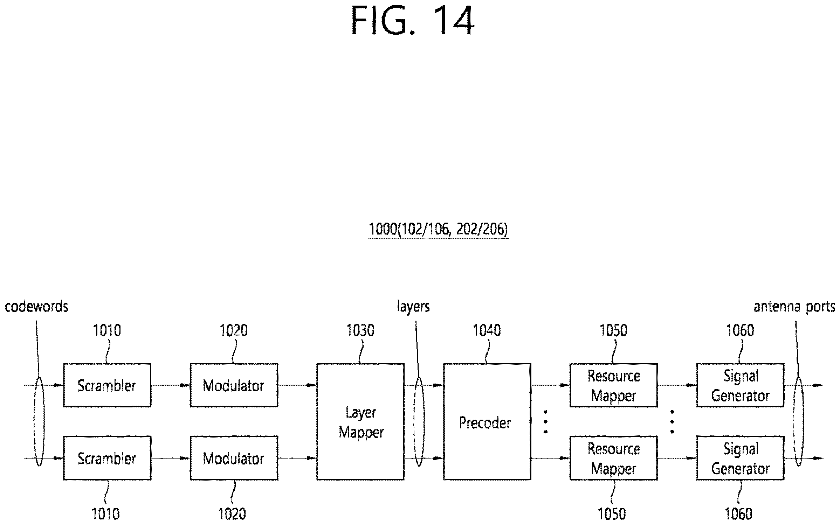

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

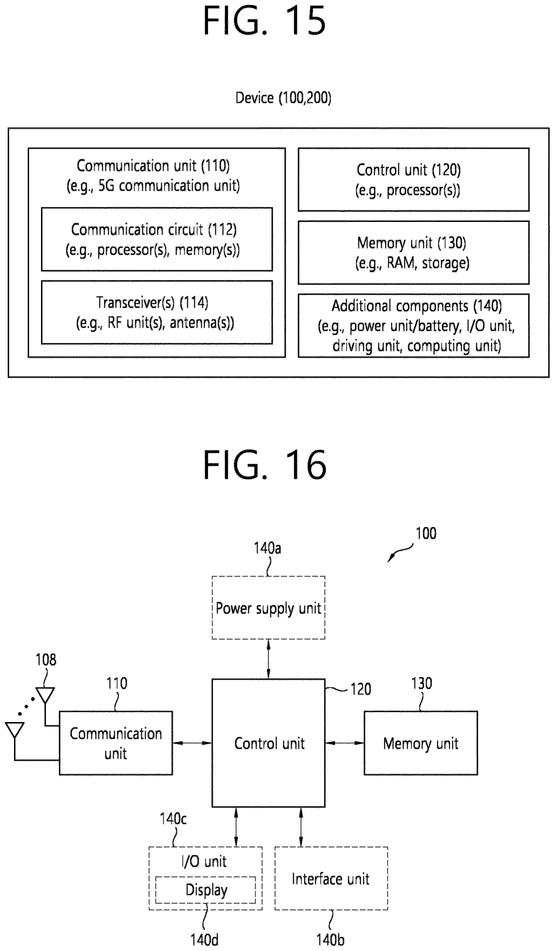

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

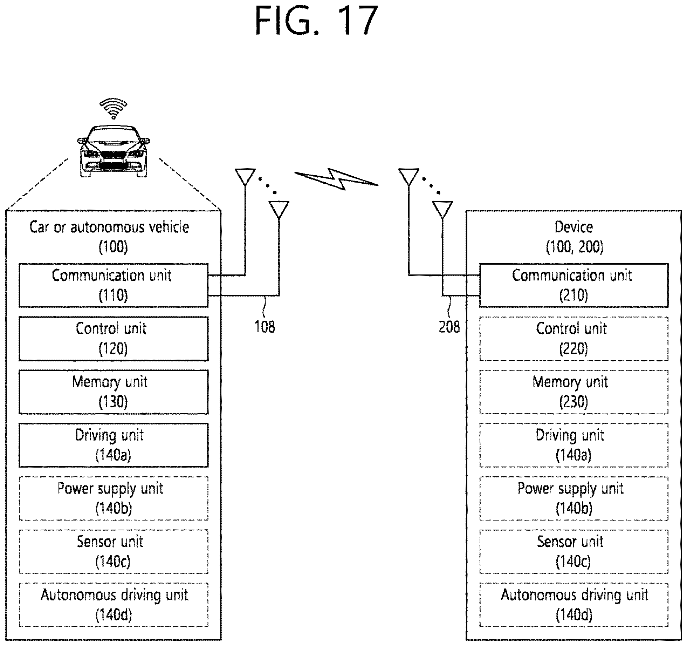

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining a plurality of sidelink (SL) DRX inactivity timers mapped to a plurality of SL quality of service (QoS) profiles related to a destination layer-2 (L2) identifier (ID);
receiving, through a physical sidelink control channel (PSCCH), first sidelink control information (SCI) for scheduling of second SCI and a physical sidelink shared channel (PSSCH);
receiving, through the PSSCH, the second SCI including cast type information and a destination layer-1 (L1) ID;
selecting a single SL DRX inactivity timer from the plurality of SL DRX inactivity timers related to the destination L1 ID, based on a failure to decode a medium access control (MAC) protocol data unit (PDU); and
starting the single SL DRX inactivity timer,
wherein the single SL DRX inactivity timer is a SL DRX inactivity timer with the longest length of the plurality of SL DRX inactivity timers.

2. The method of claim 1, wherein the destination L2 ID is 24 bits and the destination L1 ID is 16 bits.

3. The method of claim 1, wherein, based on the destination L1 ID matching 16 least significant bits (LSB) of the destination L2 ID, the single SL DRX inactivity timer is selected from the plurality of SL DRX inactivity timers related to the destination L2 ID.

4. The method of claim 1, wherein the single SL DRX inactivity timer is started in a slot following a slot in which the first SCI and the second SCI are received.

5. The method of claim 1, wherein, based on successful decoding of the MAC PDU, the single SL DRX inactivity timer is selected from the plurality of SL DRX inactivity timers related to the destination L2 ID.

6. The method of claim 5, wherein the destination L2 ID is obtained based on the destination L1 ID included in the second SCI and a destination field included in the MAC PDU.

7. The method of claim 1, wherein the first device is a device interested in receiving data related to the destination L2 ID based on groupcast.

8. The method of claim 1, wherein the cast type information is set to groupcast.

9. The method of claim 1, wherein information related to the plurality of SL DRX inactivity timers is included in a plurality of SL DRX configurations mapped to the plurality of SL QoS profiles.

10. The method of claim 1, further comprising:
monitoring SCI within a time while the single SL DRX inactivity timer is running.

11. The method of claim 1, wherein the plurality of SL QoS profiles are related to a plurality of PC5 QoS identifiers (PQIs), respectively.

12. The method of claim 1, wherein the plurality of SL DRX inactivity timers are configured for the first device.

13. The method of claim 1, wherein a time while the single SL DRX inactivity timer is running is included in an active time of the first device.

14. A first device adapted to perform wireless communication, the first device comprising:
one or more memories storing instructions;
one or more transceivers; and
one or more processors connected to the one or more memories and the one or more transceivers, wherein the one or more processors execute the instructions to:
obtain a plurality of sidelink (SL) DRX inactivity timers mapped to a plurality of SL quality of service (QoS) profiles related to a destination layer-2 (L2) identifier (ID);
control the one or more transceivers to receive, through a physical sidelink control channel (PSCCH), first sidelink control information (SCI) for scheduling of second SCI and a physical sidelink shared channel (PSSCH);
control the one or more transceivers to receive, through the PSSCH, the second SCI including cast type information and a destination layer-1 (L1) ID;
select a single SL DRX inactivity timer from the plurality of SL DRX inactivity timers related to the destination L 1 ID, based on a failure to decode a medium access control (MAC) protocol data unit (PDU); and
start the single SL DRX inactivity timer,
wherein the single SL DRX inactivity timer is a SL DRX inactivity timer with the longest length of the plurality of SL DRX inactivity timers.

15. A processing device adapted to control a first device, the processing device comprising:
one or more processors; and
one or more memories operably connected to the one or more processors and storing instructions, wherein the one or more processors execute the instructions to: obtain a plurality of sidelink (SL) DRX inactivity timers mapped to a plurality of SL quality of service (QoS) profiles related to a destination layer-2 (L2) identifier (ID);
receive, through a physical sidelink control channel (PSCCH), first sidelink control information (SCI) for scheduling of second SCI and a physical sidelink shared channel (PSSCH);
receive, through the PSSCH, the second SCI including cast type information and a destination layer-1 (L1) ID;
select a single SL DRX inactivity timer from the plurality of SL DRX inactivity timers related to the destination L 1 ID, based on a failure to decode a medium access control (MAC) protocol data unit (PDU); and
start the single SL DRX inactivity timer,
wherein the single SL DRX inactivity timer is a SL DRX inactivity timer with the longest length of the plurality of SL DRX inactivity timers.

16. A non-transitory computer-readable storage medium storing instructions that, when executed, cause a first device to:
obtain a plurality of sidelink (SL) DRX inactivity timers mapped to a plurality of SL quality of service (QoS) profiles related to a destination layer-2 (L2) identifier (ID);
receive, through a physical sidelink control channel (PSCCH), first sidelink control information (SCI) for scheduling of second SCI and a physical sidelink shared channel (PSSCH);
receive, through the PSSCH, the second SCI including cast type information and a destination layer-1 (L1) ID;
select a single SL DRX inactivity timer from the plurality of SL DRX inactivity timers related to the destination L1 ID, based on a failure to decode a medium access control (MAC) protocol data unit (PDU); and
start the single SL DRX inactivity timer,
wherein the single SL DRX inactivity timer is a SL DRX inactivity timer with the longest length of the plurality of SL DRX inactivity timers.

17. A method for performing wireless communication by a second device, the method comprising:
obtaining a plurality of sidelink (SL) DRX inactivity timers mapped to a plurality of SL quality of service (QoS) profiles related to a destination layer-2 (L2) identifier (ID);
transmitting, through a physical sidelink control channel (PSCCH), first sidelink control information (SCI) for scheduling of second SCI and a physical sidelink shared channel (PSSCH) to a first device;
transmitting, through the PSSCH, the second SCI including cast type information and a destination layer-1 (L1) ID to the first device; and
determining, based on the destination L2 ID, that a single SL DRX inactivity timer of the plurality of SL DRX inactivity timers is started by the first device,
wherein, based on the first device failing to decode a medium access control (MAC) protocol data unit (PDU), the single SL DRX inactivity timer is selected by the first device from the plurality of SL DRX inactivity timers related to the destination L1 ID, and
wherein the single SL DRX inactivity timer is a SL DRX inactivity timer with the longest length of the plurality of SL DRX inactivity timers.

18. A second device adapted to perform wireless communication, the second device comprising:
one or more memories storing instructions;
one or more transceivers; and
one or more processors connected to the one or more memories and the one or more transceivers, wherein the one or more processors execute the instructions to: obtain a plurality of sidelink (SL) DRX inactivity timers mapped to a plurality of SL quality of service (QoS) profiles related to a destination layer-2 (L2) identifier (ID);
control the one or more transceivers to transmit, through a physical sidelink control channel (PSCCH), first sidelink control information (SCI) for scheduling of second SCI and a physical sidelink shared channel (PSSCH) to a first device;
control the one or more transceivers to transmit, through the PSSCH, the second SCI including cast type information and a destination layer-1 (L1) ID to the first device; and
determine, based on the destination L2 ID, that a single SL DRX inactivity timer of the plurality of SL DRX inactivity timers is started by the first device,
wherein, based on the first device failing to decode a medium access control (MAC) protocol data unit (PDU), the single SL DRX inactivity timer is selected by the first device from the plurality of SL DRX inactivity timers related to the destination L1 ID, and
wherein the single SL DRX inactivity timer is a SL DRX inactivity timer with the longest length of the plurality of SL DRX inactivity timers.

19. A processing device adapted to control a second device, the processing device comprising:
one or more processors; and
one or more memories operably connected to the one or more processors and storing instructions, wherein the one or more processors execute the instructions to:
obtain a plurality of sidelink (SL) DRX inactivity timers mapped to a plurality of SL quality of service (QoS) profiles related to a destination layer-2 (L2) identifier (ID);
transmit, through a physical sidelink control channel (PSCCH), first sidelink control information (SCI) for scheduling of second SCI and a physical sidelink shared channel (PSSCH) to a first device;
transmit, through the PSSCH, the second SCI including cast type information and a destination layer-1 (L1) ID to the first device; and
determine, based on the destination L2 ID, that a single SL DRX inactivity timer of the plurality of SL DRX inactivity timers is started by the first device,
wherein, based on the first device failing to decode a medium access control (MAC) protocol data unit (PDU), the single SL DRX inactivity timer is selected by the first device from the plurality of SL DRX inactivity timers related to the destination L1 ID, and
wherein the single SL DRX inactivity timer is a SL DRX inactivity timer with the longest length of the plurality of SL DRX inactivity timers.

20. A non-transitory computer-readable storage medium storing instructions that, when executed, cause a second device to:
obtain a plurality of sidelink (SL) DRX inactivity timers mapped to a plurality of SL quality of service (QoS) profiles related to a destination layer-2 (L2) identifier (ID);
transmit, through a physical sidelink control channel (PSCCH), first sidelink control information (SCI) for scheduling of second SCI and a physical sidelink shared channel (PSSCH) to a first device;
transmit, through the PSSCH, the second SCI including cast type information and a destination layer-1 (L1) ID to the first device; and
determine, based on the destination L2 ID, that a single SL DRX inactivity timer of the plurality of SL DRX inactivity timers is started by the first device,
wherein, based on the first device failing to decode a medium access control (MAC) protocol data unit (PDU), the single SL DRX inactivity timer is selected by the first device from the plurality of SL DRX inactivity timers related to the destination L1 ID, and
wherein the single SL DRX inactivity timer is a SL DRX inactivity timer with the longest length of the plurality of SL DRX inactivity timers.
